# EUROPÄISCHE PATENTANMELDUNG

(11) **EP 1 227 123 A1**
(43) Veröffentlichungstag der Anmeldung: **31.07.2002**
(21) Anmeldenummer: 02001020.3
(22) Anmeldetag: 17.01.2002
(51) Int. Cl.: C08K 9/08, D04H 1/64

(54) **Verfahren zur Herstellung von wiederverwertbaren Formkörpern**

(30) Priorität: 25.01.2001 DE 10103213
(71) Anmelder: Wacker Polymer Systems GmbH & Co. KG, 84489 Burghausen (DE)
(72) Erfinder: Hashemzadeh, Abdulmajid, Dr., 84508 Burghausen (DE); Kohlhammer, Klaus, Dr., 84533 Marktl (DE); Wierer, Konrad Alfons, Dr., 84489 Burghausen (DE); Pröbstl, Herbert, 5280 Braunau am Inn (AT)
(74) Vertreter: Rimböck, Karl-Heinz, Dr.

(57) **Zusammenfassung**

Gegenstand der Erfindung ist ein Verfahren zur Herstellung von Formkörpern aus partikulären Materialien und Bindemittel, welche nach Zerkleinerung wiederverwendet werden können, dadurch gekennzeichnet, daß die partikulären Materialien mit einer Bindemittelzusammensetzung enthaltend
A) ein oder mehrere Polymerisate aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 4 bis 60 Gew.-%, bezogen auf das Gesamtgewicht des Copolymers, einer oder mehrerer Einheiten, welche polare Gruppen enthalten, und
B) ein Füllstoff oder mehrere Füllstoffe mit polarer Oberfläche, welche mit den unter A) genannten polaren Gruppen wechselwirken können,
behandelt werden und zu Formkörpern geformt und verfestigt werden, und gegebenenfalls der damit erhaltene Formkörper zur Wiederverwertung zerkleinert wird und das damit erhaltene Material zur Herstellung von Formkörpern wiederverwendet wird.

## Beschreibung

Die Erfindung betrifft ein Verfahren zur Herstellung von Formkörpern aus partikulären Materialien, insbesondere Fasermaterialien, und Bindemittel, welche nach Zerkleinerung wiederverwendet werden können.

Zur Herstellung von Faserplatten werden vielfach Bindepulver auf der Basis von vernetzbaren und nicht-vernetzbaren Polymerisaten verwendet. Als nicht-vernetzbare Binder werden beispielsweise Polypropylen (PP) oder Polyethylen (PE) verwendet. Da sich Polyethylen und Polypropylen thermoplastisch verhalten, werden mit Polypropylen oder Polyethylen hergestellte Faserplatten bei höheren Temperaturen deformiert (geringes Wärmestandvermögen).

Dagegen erhält man bei der Herstellung von Faserplatten mit vernetzbaren Bindemitteln wie Phenolharz oder wie Styrol-Acrylat-Copolymere mit vernetzbaren Gruppen Faserplatten, die einen sehr gutes Wärmestandvermögen aufweisen (EP-A 894888, DE-A 10014399). Nachteilig ist allerdings, daß solche Faserplatten, aufgrund der irreversiblen, chemischen Vernetzung, nicht mehr recycelt werden können. Solche Faserplatten können allenfalls zerkleinert und zermahlen werden und das dadurch erhältliche Material kann als Füllstoff wiederverwendet werden.

Aus der EP-A 807704 ist ein Verfahren zur Wiedergewinnung von Fasern aus Fasermaterialien bekannt, bei dem die Fasern mit einem carboxylfunktionellen Polymer, dessen Carboxylgruppen mit einem Erdalkaliion vernetzt werden, ionisch gebunden sind. Dabei wird das Fasermaterial mit einer wässrigen Lösung eines Salzes behandelt, dessen Anion ein schwerlösliches Salz mit den Erdalkalikationen bildet, und anschließend werden die vom Bindemittel befreiten Fasern abgetrennt.

In der DE-A 19535792 wird ein Verfahren zur Herstellung von wiederverwertbaren Faserverbundwerkstoffen beschrieben, bei dem als Faserbindemittel eine wässrige Polymerdispersion eingesetzt wird, deren Film bei pH-Änderung in eine wässrige Polymerisatlösung übergeht. Nach Überführen des Bindemittels in eine wässrige Lösung kann das Fasermaterial abgetrennt werden, und Fasern und Bindemittel wiederverwendet werden.

Der Erfindung lag die Aufgabe zugrunde, ein Verfahren zur Verfügung zu stellen, mit dem sich Formkörper, insbesondere aus Fasermaterialien, herstellen lassen, welche ein hohes Wärmestandvermögen aufweisen und welche recyclingfähig sind.

Gegenstand der Erfindung ist ein Verfahren zur Herstellung von Formkörpern aus partikulären Materialien und Bindemittel, welche nach Zerkleinerung wiederverwendet werden können, dadurch gekennzeichnet, daß die partikulären Materialien mit einer Bindemittelzusammensetzung enthaltend
A) ein oder mehrere Polymerisate aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 4 bis 60 Gew.-%, bezogen auf das Gesamtgewicht des Copolymers, einer oder mehrerer Einheiten, welche polare Gruppen enthalten, und
B) 4 bis 25 Gew.-%, bezogen auf das Gesamtgewicht aus Polymerisat und Füllstoff, eines Füllstoffes oder mehrerer Füllstoffe mit polarer Oberfläche, welche mit den unter A) genannten polaren Gruppen wechselwirken können,
behandelt werden und zu Formkörpern geformt und verfestigt werden.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide wird üblicherweise Vinylchlorid eingesetzt.

Geeignete polare Gruppen sind beispielsweise Carboxyl-, Hydroxy-, Phosphonat-, Sulfonat- oder NH-Gruppen. Geeignete carboxylfunktionelle Comonomere für Copolymer A) sind ethylenisch ungesättigte Mono- und Dicarbonsäuren, vorzugsweise Acrylsäure, Methacrylsäure, Crotonsäure, Itaconsäure, Fumarsäure und Maleinsäure. Die Carboxylfunktion kann auch durch Copolymerisation von Maleinsäureanhydrid in das Copolymer A) eingeführt werden. Geeignete hydroxyfunktionelle Comonomere sind Hydroxyalkylacrylate und Hydroxyalkylmethacrylate mit C₁- bis C₈-Alkylrest, vorzugsweise Hydroxyethylacrylat und -methacrylat, Hydroxypropylacrylat und -methacrylat, Hydroxybutylacrylat und -methacrylat. Geeignete NH-funktionelle Comonomere sind (Meth)Acrylamid, Diacetonacrylamid, Maleinimid, Malein- und Fumarsäuremonoalkylesteramid, Malein- und Fumarsäurediamid, Glutar- und Bernsteinsäuremonovinylesteramid, Glutar- und Bernsteinsäuremonoallylesteramid, Dimethylaminoethylmethacrylat, Dimethylaminopropylmethacrylamid, Trimethylammoniummethylmethacrylatchlorid, Trimethylammoniumpropylmethacryamidchlorid. Ein geeignetes Phosphonat-funktionelles Comonomer ist Vinylphosphonat. Geeignete Sulfonat-funktionelle Comonomere sind Vinylsulfonat, Styrolsulfonsäure, 2- Acrylamido-2-methylpropansulfonsäure.

Bevorzugt werden carboxylfunktionelle Comonomereinheiten, besonders bevorzugt solche, welche sich von Acrylsäure, Methacrylsäure, Crotonsäure, Itaconsäure, Fumarsäure, Maleinsäure und Maleinsäureanhydrid ableiten. Der Anteil an funktionellen Einheiten in Copolymer A) beträgt 4 bis 60 Gew.-%, vorzugsweise 5 bis 25 Gew.-%, jeweils bezogen auf das Gesamtgewicht des Copolymers.

Bevorzugt sind die nachfolgend genannten Polymerzusammensetzungen für das Copolymere A), welches noch die eben genannten, funktionelle Gruppen enthaltenden Einheiten, in den eben beschriebenen Mengen aufweisen:
Vinylacetat-Polymerisate;
Vinylester-Ethylen-Copolymere, wie Vinylacetat-Ethylen-Copolymere;
Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester (VeoVa9^{R}, VeoVa10^{R}), enthalten sind;
Vinylacetat-Copolymere mit einem oder mehreren copolymerisierbaren Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäure-Vinylester (VeoVa9^{R}, VeoVa10^{R}), welche gegebenenfalls noch Ethylen enthalten;
Vinylester-Acrylsäureester-Copolymerisate insbesondere mit Vinylacetat, und Butylacrylat und/oder 2-Ethylhexylacrylat, weiche gegebenenfalls noch Ethylen enthalten;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten.

Besonders bevorzugt sind dabei (Meth)acrylsäureester- und Styrol-Polymerisate:
Copolymerisate mit n-Butylacrylat und/oder 2-Ethylhexylacrylat;
Copolymerisate von Methylmethacrylat mit Butylacrylat und/oder 2-Ethylhexylacrylat, und/oder 1,3-Butadien;
Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso- und t-Butylacrylat eingesetzt werden kann.

Am meisten bevorzugt werden Zusammensetzungen mit einem carboxylfunktionellen Styrol-n-Butylacrylat- und/oder einem carboxylfunktionellen Styrol-Methylmethacrylat-n-Butylacrylat-Copolymer als Copolymer A).

Die Monomerauswahl bzw. die Auswahl der Gewichtsanteile der Comonomere erfolgt dabei so, daß im allgemeinen für in Pulverform verwendete Polymerisate eine Glasübergangstemperatur Tg von 40°C bis 110°C, und für in wässriger Dispersion bzw. Lösung verwendete Polymerisate eine Glasübergangstemperatur Tg von - 30°C bis 95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate kann mittels bekannter radikalisch initiierter Polymerisationsverfahren erfolgen, beispielsweise mittels Lösungspolymerisation oder wässriger Suspensionspolymerisation oder wässriger Emulsionspolymerisation. Bevorzugt ist die Emulsionspolymerisation. Zur Trocknung der Lösungen beziehungsweise Dispersionen können alle gängigen Trocknungsverfahren angewendet werden: Sprühtrocknung, Walzentrocknung, Gefriertrocknung, Bandtrocknung, Koagulation mit anschließender Wirbelschichttrocknung. Bevorzugt werden Sprühtrocknungs- und Walzentrocknungsverfahren angewendet.

Die Anwendung der Polymerisate kann in trockener, pulverförmiger Form, in Form einer wässrigen Dispersion oder in Wasser gelöster Form erfolgen. Vorzugsweise werden die Polymerisate als Pulver eingesetzt.

Geeignete Füllstoffe sind pulverförmige, anorganische und organische Materialien mit polarer Oberfläche, im allgemeinen mit einer hydroxyfunktionellen Oberfläche. Beispiele für anorganische Füllstoffe sind Titandioxid, Aluminiumoxid, Aluminiumhydroxid, Magnesiumoxid, Quarzmehl, Glasfaser, Glaspulver, Kreide, Talkum, Kalk, Calciumcarbonat, Magnesiumcarbonat, Bariumsulfat, Kaolin, Dolomit, Silikate wie Magnesium-, Calciumund Aluminiumsilikate. Beispiele für organische Füllstoffe sind Holzmehl, Cellulose, Stärke sowie synthetische, polare Polymere mit einer Tg > 90°C, beispielsweise Polyester, vernetzte, carboxyl- bzw. sulfonatfunktionelle Styroacrylate, letztere insbesondere als Hohlkugeln, plasmabehandelte Polymerpulver sowie Polymerharzabfälle. Die mittlere Teilchengröße der pulverförmigen Füllstoffe beträgt im allgemeinen 5 nm bis 900 µm.

Die Bindemittelzusammensetzung enthält 4 bis 25 Gew.-%, vorzugsweise 5 bis 20 Gew.-%, Füllstoff, jeweils bezogen auf das Gesamtgewicht aus Polymerisat und Füllstoff. Zur Herstellung der Bindemittelzusammensetzung können die wässrigen Dispersionen oder Lösungen des Polymerisats mit dem Füllstoff gemischt werden. Der Füllstoff wird dabei oft in Form einer Paste, in Abmischung mit oberflächenaktiven Substanzen, appliziert. Zur Herstellung von pulverförmigen Bindemittelzusammensetzungen können diese wässrigen Mischungen getrocknet werden. Es kann auch so vorgegangen werden, daß Polymerpulver und Füllstoffpulver gemischt werden oder in einem Extruder gemeinsam extrudiert werden; vorzugsweise so, daß die Mischungstemperatur kleiner als die Mindestfilmbildetemperatur MFT des Polymerisats ist, damit eine vollständige Benetzung der Füllstoffteilchen mit Polymerisat vermieden wird.

Die Bindemittelzusammensetzung eignet sich zur Herstellung von Formkörpern aus partikulären Materialien wie Fasermaterialien oder partikulären Materialien aus mineralischen Materialien, Kunststoffen oder Naturstoffen wie Holzspänen, Korkpartikeln, Glaspartikel oder Glaspulver, insbesondere Recyclingglas und Hohlglaskugeln, oder aus Kombinationen dieser Materialien. Die bevorzugte Anwendung ist die als Bindemittel für Fasermaterialien. Als Fasermaterial sind natürliche oder synthetische Rohstoffe geeignet. Beispiele hierfür sind Kunstfasern auf der Basis von faserbildenden Polymeren wie Viskose-, Polyesterwie Polyesterhäckselfasern, Polyamid-, Polypropylen-, Polyethylen-Fasern. Geeignet sind auch Mineralfasern, wie Glasfasern, Keramikfasern, Kohlefasern. Beispiele für natürliche Fasermaterialien sind Holz-, Cellulose-, Woll-, Baumwolle-, Jute-, Flachs-, Hanf-, Kokos-, Ramie- und Sisalfasern. Die Fasern können auch in Form von gewebten Textilien, von Garnen, oder in Form von Nonwovens wie Gelegen oder Gewirken eingesetzt werden. Diese Nonwovens können gegebenenfalls mechanisch vorverfestigt, beispielsweise genadelt, sein.

Je nach Anwendung erfolgt die Herstellung der Formkörper bei Raumtemperatur oder bei erhöhter Temperatur, gegebenenfalls unter erhöhtem Druck. Die Temperatur für die Verfestigung der Formkörper beträgt im allgemeinen von 20°C bis 220°C. Wird bei erhöhter Temperatur gearbeitet, beträgt diese vorzugsweise 90 bis 220°C. Falls die Herstellung der Formkörper unter Druck erfolgt, werden Drucke von 1 bis 200 bar bevorzugt. Die Bindemittelzusammensetzung wird dabei im allgemeinen in einer Menge von 5 bis 50 Gew.-%, bezogen auf das zu bindende Material eingesetzt. Die Bindermenge richtet sich nach dem zu bindenden Substrat und liegt im Falle von Polyesterfasern, Baumwollfasern zwischen 10 und 40 Gew.-%, im Falle von Naturfasern, wie Hanf, Flachs, Sisal, Jute, beispielsweise für Anwendungen im Automobilinnenausbau, vorzugsweise im Bereich von 20 bis 40 Gew.-%. Im Falle von Glas- und Mineralfasern sowie bei anderen mineralischen Materialien, wie Glaskugeln liegt der bevorzugte Bereich zwischen 10 und 30 Gew.-%. Eine weitere Anwendung ist die Herstellung von Holzplatten (HDF und MDF) und Holzextrudaten, wobei die Bindemittelzusammensetzung mit Holzpartikeln gemischt und anschließend extrudiert wird.

Bei der Herstellung von Faser-Formkörpern wird so vorgegangen, daß im Falle einer pulverförmigen Bindemittelzusammensetzung die Fasern mit der Bindemittelzusammensetzung gemischt werden, die Faser/Pulvermischung nach den üblichen Verfahren der Nonwovenstechnologie, gegebenenfalls nach Kardieren der Faser/-Pulvermischung und Nadeln ausgelegt wird, und durch Temperaturerhöhung, gegebenenfalls unter Anwendung von Druck und/oder Heißdampf gebunden wird. Die Faserbindung kann auch mittels Einstreuen der pulverförmigen Bindemittelzusammensetzung in ein Gewebe, Gelege oder in ein zuvor abgelegtes Faserbett erfolgen, und ,gegebenenfalls nach Kardieren der Faser/Pulvermischung und Nadeln, das Bindepulver durch Temperaturerhöhung, gegebenenfalls unter zusätzlicher Anwendung von Druck und oder Heißdampf, aufgeschmolzen und gehärtet werden.

Bei der Anwendung einer wässrigen Bindemittelzusammensetzung wird diese in bekannter Weise mittels Besprühen, Auftragung mit Rakel, Pflatschen oder mittels Tauchen auf das partikuläre Material oder auf das Nonwoven aufgetragen und dieses dann mittels Temperaturerhöhung, gegebenenfalls unter Anwendung von Druck, gebunden.

Überraschenderweise wird durch die Kombination von Füllstoffen mit polarer Oberfläche und Polymeren mit polaren Gruppen ein hohes Wärmestandvermögen bei Temperaturen über 70°C erreichte, ohne daß die Wasseraufnahme der Formkörper signifikant zunimmt. Nach diesem Verfahren hergestellte Formkörper können zur Wiederverwertung zerkleinert werden und zur Herstellung von Formkörpern wiederverwendetwerden, da hier das hohe Wärmestandvermögen durch eine physikalische Wechselwirkung zustandekommt. Derart gebundene Formkörper bleiben im Gegensatz zu chemischen Vernetzungen bei der Wiederverwendung bei höheren Temperaturen verarbeitbar.

Zur Wiederverwertung werden die Formkörper zerkleinert, vorzugsweise granuliert oder pulverisiert. Die damit erhaltenen Materialien können erneut zu Formkörpern verarbeitet werden. Alternativ dazu können die damit erhaltenen Materialien als Bindemittel zur Herstellung von Formkörpern aus partikulären Materialien eingesetzt werden. Vorzugsweise werden bei der Wiederverwertung noch Zusatzmengen von weiteren Bindemitteln, oder von der eben beschriebenen Bindemittelzusammensetzung aus A) und B), oder noch neue Faser zugegeben, letzteres da bei der Zerkleinerung die Faserform verändert werden kann.

Die nachfolgenden Beispiele dienen der weiteren Erläuterung der Erfindung:

### Beispiel 1:

Eine wässrige Dispersion eines Copolymerisats von Styrol, n-Butylacrylat und Acrylsäure mit einem Acrylsäuregehalt von 10 Gew.-% und einer Tg von 95°C wurde mittels Sprühtrocknung getrocknet. Das damit erhaltene Pulver wurde mit jeweils 10 Gew.-%, 15 Gew.-% und 20 Gew.-% einer Talkum/Dolomit-Mischung gemischt, jeweils bezogen auf das Gesamtgewicht aus Polymer und Füllstoff.
Zur Herstellung von Pressplatten wurden 107 g Reißbaumwolle mit jeweils 32 g der erhaltenen Bindemittelzusammensetzungen vermischt und auf einer Fläche von 24 x 24 cm ausgebreitet. Die Faser-Pulvermischungen wurden noch mit 10 g Wasser mittels Sprühauftrag angefeuchtet und anschließend bei einer Temperatur von 180°C 5 min lang verpresst. Der Preßdruck wurde so gewählt, daß jeweils hart verpresste Platten (2 mm Dicke, 2200 g/m² Flächengewicht, 1115 kg/m³ Raumgewicht) und weiche Platten (10 mm Dicke, 2200 g/m² Flächengewicht, 223 kg/m³ Raumgewicht) erhalten wurden.

### Vergleichsbeispiel 2:

Es wurde analog Beispiel 1 vorgegangen, mit dem Unterschied, daß ein Copolymerisat von Styrol und n-Butylacrylat mit nur 2 Gew.-% Acrylsäure (Tg = 95°C) eingesetzt wurde.

### Vergleichsbeispiel 3:

Es wurde analog Beispiel 1 vorgegangen, mit dem Unterschied, daß Polyethylen eingesetzt wurde.

### Beispiel 4:

Eine gemäß Beispiel 1 gepresste Platte wurden zu Partikeln (ca. 2 x 2 mm) zerkleinert und danach analog dem Vorgehen in Beispiel 1 wieder zu einer harten Platte verpresst.

### Beispiel 5:

Eine gemäß Beispiel 1 gepresste Platten wurde, wie in Beispiel 4 beschrieben, zerkleinert. Anschließend wurden 55 g dieser Partikel mit 64 g Reißbaumwolle und mit 19 g des Bindepulvers aus Beispiel 1 gemischt und analog dem Vorgehen in Beispiel 1 zu harten Platten verpresst.

### Testmethoden:

### Wasseraufnahme (WA):

Zur Bestimmung der Wasseraufnahme wurden Prüfkörper (Abmessung: 50 mm x 20 mm) aus den Platten geschnitten und für 1 Stunde bzw. 24 Stunden in Wasser gelagert und die Gewichtsaufnahme infolge Wasserquellung gravimetrisch bestimmt.

### Wärmestandvermögen (WSV):

Zur Prüfung des Wärmestandvermögens wurden Prüfkörper (Abmessung: 240 mm x 20 mm) aus den Platten geschnitten und diese Streifen waagerecht auf einer planen Unterlage fixiert, so daß die Streifen mit einer Länge von 100 mm über den Rand der Unterlage überstanden. Im Falle der harten Formkörper (Plattendicke: 2 mm) wurde ein 40g-Gewicht angehängt, während die weichen Formkörper (Plattendicke: 10 mm) nur der Schwerkraft ihres Eigengewichts ausgesetzt waren. Das Wärmestandvermögen wurde durch Messung der Durchbiegung d nach einer einstündigen Lagerung bei 90°, 100° und 120°C ermittelt.

**Tabelle 1:**

| Beispiel | Füllstoff (Gew.-%) | WSV/90°C/40g | WSV/100°C/40g | WSV/120°C/40g | WA (1h) | WA (24h) |
|---|---|---|---|---|---|---|
| Bsp. 1 | 2 | 11 mm | 12 mm | 32 mm | 29 % | 38 % |
| Bsp. 1 | 10 | 9 mm | 11 mm | 24 mm | 23 % | 33 % |
| Bsp. 1 | 15 | 8 mm | 13 mm | 15 mm | 37 % | 52 % |
| Bsp. 1 | 20 | 8 mm | 18 mm | 19 mm | 56 % | 69 % |
| V.Bsp.2 | 2 | 66 mm | 67 mm | 77 mm | 11 % | 21 % |
| V.Bsp.2 | 10 | 54 mm | 69 mm | 79 mm | 31 % | 55 % |
| V.Bsp.3 | 0 | 35 mm | 39 mm | 56 mm | 23 % | 27 % |
| V.Bsp.3 | 10 | 39 mm | 43 mm | 58 mm | 17 % | 22 % |
| Bsp. 4 | 2 | 14 mm | 22 mm | 69 mm | 19 % | 31 % |
| Bsp. 4 | 15 | 14 mm | 36 mm | 75 mm | 15 % | 31 % |
| Bsp. 4 | 20 | 23 mm | 52 mm | 80 mm | 23 % | 36 % |
| Bsp. 5 | 2 | 12 mm | 17 mm | 45 mm | 25 % | 35 % |
| Bsp. 5 | 15 | 11 mm | 16 mm | 35 mm | 23 % | 41 % |
| Bsp. 5 | 20 | 12 mm | 20 mm | 40 mm | 43 % | 56 % |

Die Ergebnisse von Beispiel 1 zeigen gegenüber den Ergebnissen der Vergleichsbeispiele eine deutliche Verbesserung des Wärmestandvermögens bei 120°C.

Das Wärmestandvermögen der recycelten Platten gemäß Beispiel 4 war etwas geringer als bei der ursprünglichen Platte (Beispiel 1). Diese Abnahme war zu erwarten, da sich beim Zerkleinern der Platten die Faserlänge und -Morphologie ändert. Um diese Qualitätsverluste auszugleichen, wurden in Beispiel 5 neue und recycelte Rohstoffe zusammengemischt. Die Höhe der Qualitätsverlust hängt auch von der verwendeten Zerkleinerungstechnik ab: Je voluminöser die zerkleinerten Partikel sind, um so geringer wird der Qualitätsverlust sein.

## Patentansprüche

1. Verfahren zur Herstellung von Formkörpern aus partikulären Materialien und Bindemittel, welche nach Zerkleinerung wiederverwendet werden können, **dadurch gekennzeichnet, daß** die partikulären Materialien mit einer Bindemittelzusammensetzung enthaltend
A) ein oder mehrere Polymerisate aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 4 bis 60 Gew.-%, bezogen auf das Gesamtgewicht des Copolymers, einer oder mehrerer Einheiten, welche polare Gruppen enthalten, und
B) 4 bis 25 Gew.-%, bezogen auf das Gesamtgewicht aus Polymerisat und Füllstoff, eines oder mehrerer Füllstoffe mit polarer Oberfläche, welche mit den unter A) genannten polaren Gruppen wechselwirken können,
behandelt werden und zu Formkörpern geformt und verfestigt werden.

2. Verfahren nach Anspruch 1, **dadurch gekennzeichnet, daß** die Polymerisate A) Carboxyl-, Hydroxy-, Phosphonat-, Sulfonat- oder NH-Gruppen enthalten.

3. Verfahren nach Anspruch 1 bis 2, **dadurch gekennzeichnet, daß** bei den Polymerisaten A) die Monomerauswahl und die Auswahl der Gewichtsanteile der Comonomere so erfolgt, daß für in Pulverform verwendete Polymerisate eine Glasübergangstemperatur Tg von 40°C bis 110°C, und für in wässriger Dispersion bzw. Lösung verwendete Polymerisate eine Glasübergangstemperatur Tg von -30°C bis 95°C resultiert.

4. Verfahren nach Anspruch 1 bis 3, **dadurch gekennzeichnet, daß** als Polymerisate A) Copolymerisate mit n-Butylacrylat und/oder 2-Ethylhexylacrylat, Copolymerisate von Methylmethacrylat mit Butylacrylat und/oder 2-Ethylhexylacrylat, und/oder 1,3-Butadien, Styrol-1,3-Butadien-Copolymere und Styrol-(Meth)Acrylsäureester-Copolymere enthalten sind.

5. Verfahren nach Anspruch 4, **dadurch gekennzeichnet, daß** als Polymerisat A) carboxylfunktionelle Styrol-n-Butylacrylatoder carboxylfunktionelle Styrol-Methylmethacrylat-n-Butylacrylat-Copolymere enthalten sind.

6. Verfahren nach Anspruch 1 bis 5, **dadurch gekennzeichnet, daß** als Füllstoffe B) ein oder mehrere aus der Gruppe umfassend Titandioxid, Aluminiumoxid, Aluminiumhydroxid, Magnesiumoxid, Quarzmehl, Glasfaser, Glaspulver, Kreide, Talkum, Kalk, Calciumcarbonat, Magnesiumcarbonat, Bariumsulfat, Kaolin, Dolomit, Magnesium-, Calcium- und Aluminiumsilikat, Holzmehl, Cellulose, Stärke sowie synthetische, polare Polymere mit einer Tg > 90°C enthalten sind.

7. Verfahren nach Anspruch 1 bis 6, **dadurch gekennzeichnet, daß** die Formkörper aus Fasermaterialien oder partikulären Materialien aus mineralischen Stoffen, Kunststoffen oder Naturstoffen hergestellt werden.

8. Verfahren nach Anspruch 1 bis 7, **dadurch gekennzeichnet, daß** die damit erhaltenen Formkörper zur Wiederverwertung zerkleinert werden, und das damit erhaltene Material zur Herstellung von Formkörpern wiederverwendet wird.

9. Verfahren nach Anspruch 8, **dadurch gekennzeichnet, daß** zur Wiederverwertung die Formkörper zerkleinert werden und das damit erhaltene Material als Bindemittel zur Herstellung von Formkörpern aus partikulären Materialien eingesetzt wird.

10. Verfahren nach Anspruch 8, **dadurch gekennzeichnet, daß** zur Wiederverwertung die Formkörper zerkleinert werden und das damit erhaltene Material mit Zusatzmengen von weiteren Bindemitteln, oder von der Bindemittelzusammensetzung aus A) und B), oder von neuer Faser, zur Herstellung von Formkörpern aus partikulären Materialien eingesetzt wird.
